Europäisches Patentamt

European Patent Office

Office européen des brevets

(11) Veröffentlichungsnummer: **0 373 395**
**A2**

(12) # EUROPÄISCHE PATENTANMELDUNG

(21) Anmeldenummer: 89121595.6

(22) Anmeldetag: 23.11.89

(51) Int. Cl.⁵: **B29C 51/42, B29B 13/02**

(30) Priorität: 15.12.88 DE 3842135

(43) Veröffentlichungstag der Anmeldung:
20.06.90 Patentblatt 90/25

(84) Benannte Vertragsstaaten:
AT BE CH DE ES FR GB GR IT LI LU NL SE

(71) Anmelder: Krämer & Grebe GmbH & Co. KG
Maschinenfabrik
Im Ruttert
D-3560 Biedenkopf-Wallau(DE)

(72) Erfinder: Schmeck, Alfred
Pfefferacker 2
D-3560 Biedenkopf(DE)
Erfinder: Grusdt, Rainer
Friedrich-Ebert-Ring 16
D-6470 Büdingen 2(DE)

(74) Vertreter: Missling, Arne, Dipl.-Ing.
Patentanwalt Bismarckstrasse 43
D-6300 Giessen(DE)

(54) Verfahren und Vorrichtung zur Ausbildung eines behälterförmigen Folienkörpers.

(57) Zur Ausbildung eines behälterförmigen Folienkörpers ist es erforderlich, daß die Folie vollständig gegen eine Heizplatte angelegt wird.

Erfindungsgemäß ist zur Ausbildung eines balligen Bereichs (3) einer Folie (1, 17) an einer Trägerplatte (6) eine Einrichtung (7) vorgesehen, welche beispielsweise eine Druckluftzufuhr (8,) umfassen kann. Eine Heizplatte (2) ist höhenveränderbar unterhalb der Trägerplatte (6) angeordnet und ist nachfolgend mit dem balligen Bereich (3) in Anlage bringbar, so daß die Folie (1, 17) in vollständiger Anlage an die Heizplatte (2) bringbar ist.

Die Erfindung ist für alle Arten von FolienVerpackungsmaschinen verwendbar.

Fig. 5

## Verfahren und Vorrichtung zur Ausbildung eines behälterförmigen Folienkörpers

Die Erfindung bezieht sich auf ein Verfahren und eine Vorrichtung zur Ausbildung eines behälterförmigen Folienkörpers. Dabei bezieht sich die Erfindung insbesondere auf ein Verfahren, bei welchem eine thermoplastische Folie erwärmt und anschließend tiefgezogen wird, sowie auf eine Vorrichtung mit einer Trägerplatte zur Halterung des Folienbereichs und einer Heizplatte.

Bei der Herstellung von Verpackungen, welche durch Verschweißen einer Ober- und einer Unterfolie gebildet werden, ist es in vielen Fällen erforderlich, die Unterfolie behälterförmig zu verformen, um die zu verpackenden Gegenstände einlegen zu können.

Die Ausbildung eines behälterförmigen Folienkörpers erfolgt, wie aus dem Stand der Technik bekannt, dadurch, daß die Folie mit einer Heizplatte in Kontakt gebracht wird und somit auf eine ausreichende Temperatur erwärmt wird, um anschließend mittels eines Tiefziehvorganges verformt zu werden.

Um ein möglichst gleichmäßiges, vollflächiges Anliegen der Folie an der Heizplatte zu erreichen, wurde in der DE-OS 30 09 981 vorgeschlagen, die Oberfläche der Heizplatte zu strukturieren, um die Beseitigung eines Luftpolsters zwischen der Folie und der Heizplatte zu ermöglichen. Dabei ist die Strukturierung so ausgebildet, daß diese großflächige Hohlräume oder Einprägungen umfaßt, durch welche die Luft abgesaugt werden kann. Der Nachteil bei dieser Vorgehensweise besteht darin, daß die Folie insgesamt gedehnt wird, da die Gesamtoberfläche der strukturierten Heizplatte größer ist als die ungelenkte Fläche der Folie. Die Folie wird somit in Teilbereichen gedehnt oder verlängert, was zu erheblichen Wellenbildungen und Unregelmäßigkeiten führt.

Es ist aus dem Stand der Technik weiterhin bekannt, die Heizplatte mit einer feinkörnigen Struktur zu versehen, so daß das zwischen der Folie und der Heizplatte befindliche Luftpolster abgesaugt werden kann. Bedingt durch die feinkörnige Struktur wird zwar die Folie bei diesem Verfahren nicht gedehnt, die feinkörnige Struktur zeichnet sich jedoch auf der Folie ab und ist bei der späteren fertiggestellten Verpackung sichtbar. Da die Bereiche der Folie, welche nicht auf die Heizplatte aufliegen, somit nicht mit einer Struktur versehen sind, ergibt sich ein unbefriedigendes optisches Aussehen der fertigen Verpackung.

Der Erfindung liegt die Aufgabe zugrunde, eine Vorrichtung und ein Verfahren der eingangs genannten Art zu schaffen, welche bei einfachem Aufbau und einfacherer, betriebssicherer Handhabbarkeit ein vollflächiges Anliegen der Folie an der Heizplatte ohne Beeinträchtigung oder Verformung der Folie ermöglichen.

Hinsichtlich des Verfahrens wird die Aufgabe erfindungsgemäß dadurch gelöst, daß ein Folienbereich in einem Abstand zu einer Heizplatte gehaltert und in seinem mittleren Bereich ballig in Richtung auf die Heizplatte verformt wird, daß nachfolgend zunächst die Heizplatte in Anlage gegen den balligen Bereich und dann bis zur vollflächigen Auflage der Folie gebracht wird und daß in einem weiteren Verfahrensschritt die Folie tiefgezogen wird.

Das erfindungsgemäße Verfahren zeichnet sich durch eine Reihe erheblicher Vorteile aus. Da der zu erwärmende Folienbereich zunächst in einem Abstand zu der Heizplatte gehalten wird, wird dieser Bereich zunächst vorgewärmt, so daß es möglich ist, ihn anschließend ballig in Richtung auf die Heizplatte zu verformen. Dadurch, daß bei dem erfindungsgemäßen Verfahren die Heizplatte nachfolgend in Anlage gegen den balligen Bereich der Folie gebracht wird, ist es möglich, die Folie in bereits vorgewärmtem Zustand gegen die Neizplatte anzulegen, so daß das Auftreten von Luftblasen oder Luftpolstern vermieden wird. Durch die ballige, von der Seite der Heizplatte aus gesehen konvexe Formgebung des Folienbereichs wird erreicht, daß dieser in der ersten Berührungsphase die Heizplatte lediglich punktförmig berührt, wobei durch die nachfolgende Annäherung der Heizplatte die Berührungsfläche stetig zunimmt. Erfindungsgemäß wird somit gewährleistet, daß die Folie bei gleichzeitiger seitlicher Verdrängung der Luft vollflächig gegen die Heizplatte angelegt wird.

Bei dem erfindungsgemäßen Verfahren ist es somit nicht erforderlich, die Heizplatte mit Strukturierungen, Riffelungen oder ähnlichem zu versehen, um, wie aus dem Stand der Technik bekannt, die Lufteinschlüsse zu entfernen.

Die erfindungsgemäß nunmehr vorgewärmte Folie kann nachfolgend in einem weiteren Verfahrensschritt tiefgezogen werden, wobei die gleichmäßige Erwärmung des gesamten tiefzuziehenden Folienbereichs ein gutes Arbeitsergebnis sicherstellt, welches auch optischen Anforderungen gerecht wird.

Erfindungsgemäß ist weiterhin vorgesehen, daß der ballige Folienbereich auf die unterhalb der Folie angeordnete Heizplatte aufgelegt wird. Bedingt durch die dabei wirksamen Schwerkrafteinflüsse erfolgt zum einen eine Abstützung der Folie durch die Heizplatte, zum anderen ist sichergestellt, daß die Folie mit einer ausreichenden Kraft und gleichmäßig gegen die Heizplatte anliegt.

Erfindungsgemäß ergeben sich verschiedene Möglichkeiten, den Folienbereich ballig zu verformen. Eine Ausgestaltungsvariante der Erfindung besteht darin, druckbeaufschlagtes Gas, beispielsweise Druckluft zu verwenden, welche die der Heizplatte abgewandte Seite der Folie beaufschlagt. Alternativ dazu ist es auch möglich, den Folienbereich mittels eines elastischen Formkörpers, welcher oberhalb der Folie angeordnet ist, ballig zu verformen, wobei der elastische Formkörper durch die nachfolgende Anlage der Heizplatte gegen den Folienbereich ebenfalls verformt wird. Der elastisch verformbare Formkörper kann entweder in Form einer Membrane oder in Form eines schaumgummiartigen Körpers ausgebildet sein.

Zur Unterstützung des Auflegevorganges der Folie auf die Heizplatte kann es erfindungsgemäß weiterhin besonders günstig sein, wenn der Raum zwischen der Folie und der Heizplatte mit einem Vakuum oder Unterdruck beaufschlagt wird. Diese Maßnahme erleichtert die Abfuhr der Luft beim Auflegen der Folie auf die Heizplatte.

Um die Folie nach Beendigung der Vorwärmung tiefziehen zu können, wird erfindungsgemäß die Heizplatte bevorzugterweise nach Beendigung der Vorwärmung von der Folie wegbewirkt. Die Trennung der Folie von der Heizplatte kann erfindungsgemäß auch dadurch unterstützt werden, daß die Folie durch Anlegen eines Vakuums an der Oberseite der Folie von der Heizplatte weggezogen wird.

Nach dem erfindungsgemäßen Verfahren kann es sich weiterhin als besonders günstig erweisen, wenn die erwärmte Folie mittels eines druckbeaufschlagten Gases unter Verwendung einer Tiefziehform tiefgezogen wird. Dieser Verfahrensschritt stellt sicher, daß die Folie zum einen in die Form des Tiefziehwerkzeugs gebracht wird und zum anderen Beschädigungen der Folie ausgeschlossen werden.

Hinsichtlich der Vorrichtung wird die Aufgabe erfindungsgemäß dadurch gelöst, daß der Rand des Folienbereichs an der Trägerplatte halterbar ist, daß im mittleren Bereich der Trägerplatte eine Einrichtung zur balligen Verformung der Folie angeordnet ist und daß die Heizplatte eben ausgebildet und höhenveränderbar unterhalb der Trägerplatte angeordnet ist.

Die erfindungsgemäße Vorrichtung zeichnet sich durch eine Reihe erheblicher Vorteile aus. Da die Folie bzw. der zu erwärmende Folienbereich am Rand an der Trägerplatte halterbar ist, ist sichergestellt, daß die Folie gleichmäßig und, bezogen auf die ballige Ausgestaltung, symmetrisch verformt werden kann. Das Auftreten von Knicken oder Rissen wird somit vermieden. Durch die erfindungsgemäß vorgesehene Einrichtung zur balligen Verformung der Folie, welche am mittleren Bereich der Trägerplatte angeordnet ist, ist es weiterhin möglich, die Folie so zu verformen, daß diese, nachdem sie in einem gewissen Abstand zu der Heizplatte gehalten und vorgewärmt wurde, die Heizplatte im wesentlichen mit ihrem zentrischen Bereich berührt und nachfolgend gleichmäßig aufgelegt werden kann.

Als besonders vorteilhaft erweist es sich, daß bei der erfindungsgemäßen Vorrichtung die Heizplatte eben ausgebildet ist. Es sind keine Strukturierungen oder Luftkanäle erforderlich, da erfindungsgemäß die Folie punktuell aufgelegt und auf der Heizplatte abgerollt wird. Da sich die im wesentlichen kreisrunde Auflagefläche der Folie radial vergrößert, besteht keine Möglichkeit zum Einschluß von Luftblasen. Weiterhin wird die Folie erfindungsgemäß gleichmäßig auf die Heizplatte aufgelegt, so daß lokale Längenveränderungen oder Dehnungen ausgeschlossen sind, welche bei den aus dem Stand der Technik bekannten Vorrichtungen zu dem unerwünschten Auftreten von Wellen oder ähnlichen führen. Weiterhin ist es erfindungsgemäß günstig, die Trägerplatte unterhalb der Heizplatte anzuordnen, es ist aber auch möglich, die Bewegungsrichtung der Trägerplatte umzudrehen und diese von oben der Folie anzunähern.

Die Ausgestaltung zur Einrichtung zur balligen Verformung der Folie ermöglicht unterschiedliche Ausgestaltungsvarianten. So ist es beispielsweise günstig, die Einrichtung so auszubilden, daß diese eine Zufuhr für ein druckbeaufschlagtes Gas, beispielsweise Druckluft, zwischen die Folie und die Trägerplatte umfaßt. Diese Ausgestaltungsform zeichnet sich durch einen besonders einfachen Aufbau aus und gestattet einfachste Steuerungsmöglichkeiten bei einem Höchstmaß an Zuverlässigkeit.

Alternativ dazu kann die Einrichtung zur balligen Verformung der Folie auch einen zwischen der Trägerplatte und der Folie angeordneten, elastischen, ballig ausgebildeten Körper umfassen, welcher beispielsweise aus einem schaumgummiähnlichen Material gefertigt sein kann. In einer weiteren Ausgestaltungsvariante der Erfindung ist vorgesehen, daß zwischen der Trägerplatte und der Folie eine Membrane angeordnet ist, welche ballig verformbar oder verformt sein kann. Die Verformung der Membrane kann ebenfalls mittels Druckluftbeaufschlagung oder ähnlichem erfolgen.

Erfindungsgemäß kann weiterhin vorgesehen sein, daß die Heizplatte im Innenraum eines nach oben offenen Gehäuses angeordnet ist und daß der Innenraum dieses Gehäuses mit einer Unterdruckversorgung verbunden ist. Durch diesen zusätzlichen Unterdruck- oder Vakuumanschluß kann das Auflegen der Folie auf die Heizplatte beschleunigt werden, da die Folie selbst nur zum Teil die Luft verdrängen muß, während ein Teil der Luft durch die Unterdruckversorgung abgesaugt wird.

Bei der letztbeschriebenen Ausgestaltungsform kann es sich weiterhin als günstig erweisen, wenn das Gehäuse und die Trägerplatte gegeneinander abdichtbar sind, da dann eine gleichmäßige Absaugung der Luft gewährleistet ist.

Weiterhin kann erfindungsgemäß auch die Trägerplatte mit einer Unterdruckversorgung versehen sein, welche dazu dient, nach erfolgter Vorwärmung der Folie diese von der Heizplatte abzuheben. Normalerweise erfolgt der Trennungsvorgang zwischen der Heizplatte und der Folie dadurch, daß die Heizplatte wegbewegt wird. Dies kann jedoch, insbesondere bei sehr dünnen Folien, dazu führen, daß einzelne Bereiche der Folie an der Heizplatte hängenbleiben und auf diese Weise verformt und/oder unterschiedlich erwärmt werden. Durch eine Unterdruckbeaufschlagung des Raumes zwischen der Trägerplatte und der Folie wird diese gleichmäßig gegen die Trägerplatte gezogen und von der Heizplatte getrennt.

Erfindungsgemäß erweist es sich weiterhin als besonders günstig, wenn die Trägerplatte auf eine Tiefziehform aufsetzbar ist, da dann die von der Heizplatte abgehobene Folie direkt einem nachfolgenden Tiefziehvorgang zugeführt werden kann. Dabei kann die Zufuhrleitung für druckbeaufschlagtes Gas, welche an der Trägerplatte vorgesehen ist, verwendet werden, um den Tiefziehvorgang durchzuführen.

Um die ballige Ausbildung der Folie zu beschleunigen, kann es sich auch als günstig erweisen, unterhalb der zu verformenden Folie bereits dann einen Unterdruck anzulegen, wenn diese noch nicht gegen die Heizplatte angelegt ist.

Im folgenden wird die Erfindung anhand von Ausführungsbeispielen in Verbindung mit der Zeichnung beschrieben. Dabei zeigt:

Fig. 1 eine schematische Seitenansicht einer Verpackungsmaschine, welche die erfindungsgemäße Vorrichtung umfaßt;

Fig. 2 eine schematische Schnittansicht eines ersten Ausführungsbeispiels der erfindungsgemäßen Vorrichtung im geöffneten Zustand;

Fig. 3 eine Seitenansicht der in Fig. 2 gezeigten Vorrichtung in einem betriebsbereiten Zustand;

Fig. 4 eine schematische Darstellung der Anlage der Folie gegen die Heizplatte;

Fig. 5 eine schematische Darstellung eines weiteren Ausführungsbeispiels eines Teils der erfindungsgemäßen Vorrichtung;

Fig. 6 bis 8 verschiedene schematische Ansichten der einzelnen Arbeitsschritte der in Fig. 5 gezeigten Vorrichtung;

Fig. 9 eine weitere Ausführungsform gemäß der Erfindung; und

Fig. 10 einen Längsschnitt nach Linie X-X in Fig. 9.

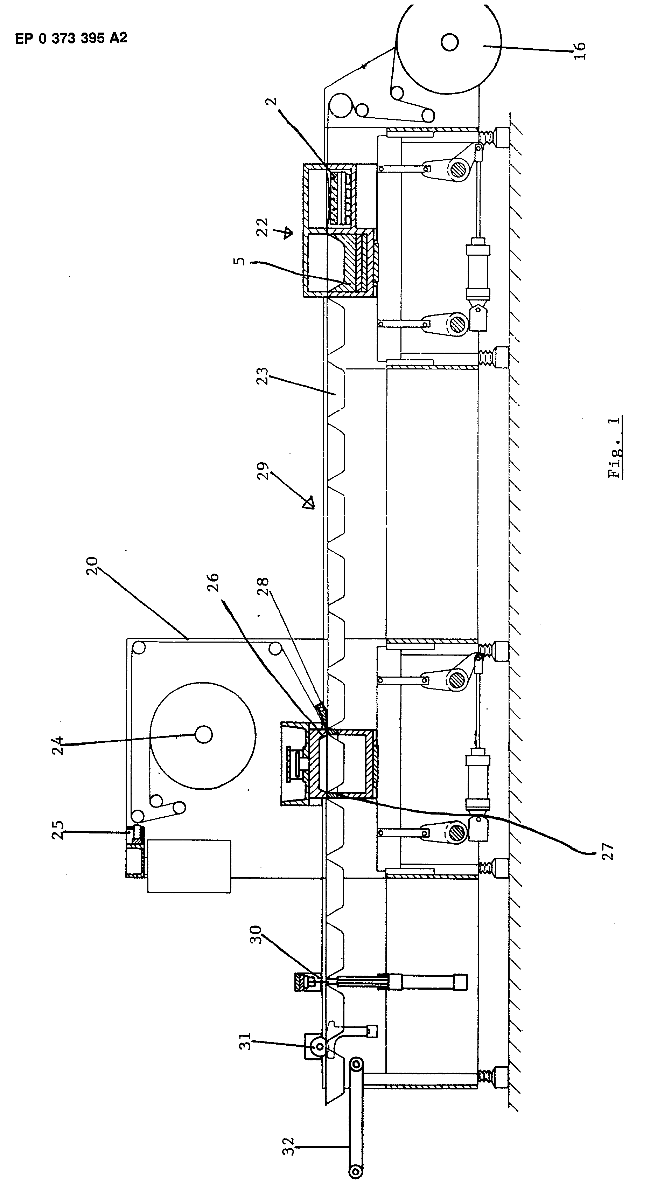

Die in Fig. 1 gezeigte Verpackungsmaschine umfaßt eine Abwickelvorrichtung 16 für eine Unterfolie 17, welcher eine Heizplatte 2 nachgeschaltet ist. Für den Fall, daß bedruckte Folien verwendet werden sollen, können Steuerköpfe vorgesehen werden. Diese Druckmarken-Steuerköpfe werden benötigt, um bedruckte Bereiche der Unterfolie 17 entsprechenden Bereichen einer Oberfolie 20 zuzuordnen.

Die Heizplatte 2 dient dazu, die Unterfolie 17 soweit vorzuwärmen, daß diese in dem Bereich, in welchem sie noch nicht von einer Kette 21 geführt und transportiert ist, soweit dehnbar ist, daß Toleranzen ausgeglichen werden können. Die Unterfolie 17 wird nachfolgend von den Transportketten 21 beidseitig in bekannter Weise gefaßt und geführt. Die Transportketten 21 sind in Form von Endlosketten ausgebildet.

Nachfolgend wird die Unterfolie 17 der erfindungsgemäßen Vorrichtung 22 zugeführt, welche nachstehend im einzelnen noch beschrieben werden wird. In der Vorrichtung 22 werden einzelne Behälter 23 in der endlos durchlaufenden Unterfolie 17 ausgebildet.

Die Oberfolie 20, welche ebenfalls von einer Abwickelvorrichtung 24 unter Vorbeileitung an Druckmarken-Steuerköpfen 25 zugeführt wird, gelangt, ebenso wie die nunmehr tiefgezogene Unterfolie 17, in den Bereich von Siegelwerkzeugen, in welchen die Ober- und die Unterfolie miteinander verbunden werden. Im Bereich der Siegelwerkzeuge 26, 27 ist eine Düsenleiste 28 zur Evakuierung des Innenraums 12 der Verpackung vorgesehen, welche sich quer über die Einlaufseite einer Verpackungsstation 29 erstreckt.

Vor der Verpackungsstation 29 wird weiterhin in nicht dargestellter Form der zu verpackende Inhalt in die tiefgezogene Unterfolie eingebracht.

Das nunmehr versiegelte, befüllte Folienband wird nachfolgend an einer Schneideinrichtung 30 in einzelne Verpackungen quergeteilt und mittels eines Längsschneidmessers 31 beschnitten. Über ein nachfolgendes Förder band 32 werden die einzelnen, voneinander separierten Verpackungen weggefördert.

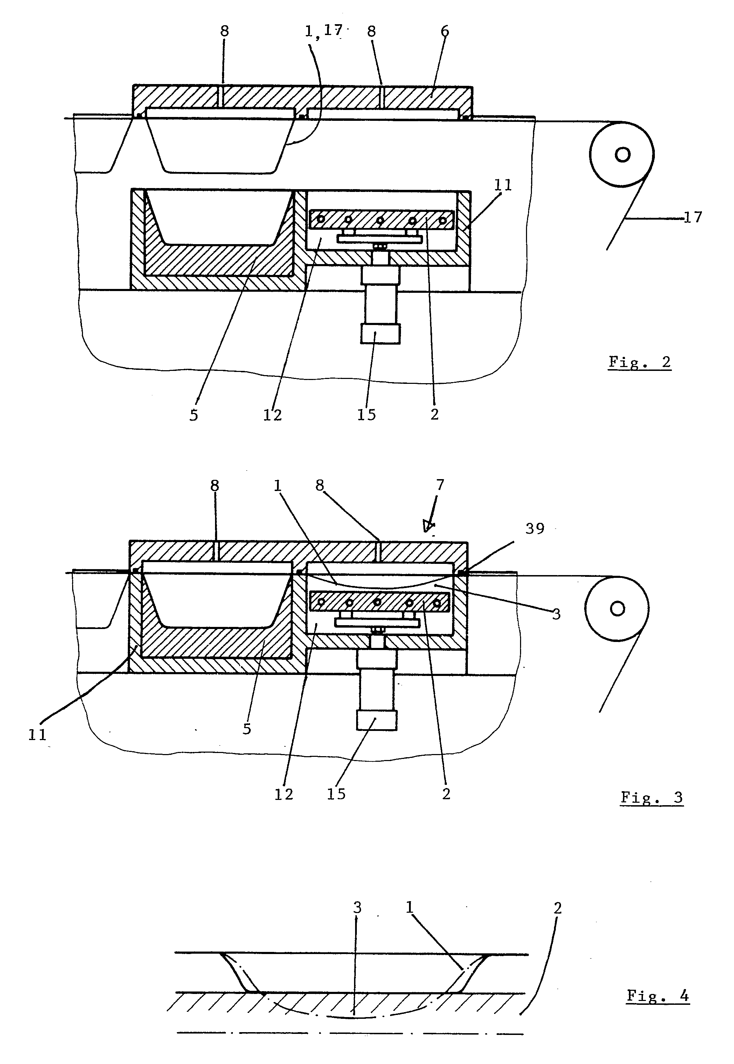

In den Fig. 2 und 3 ist ein erstes Ausführungsbeispiel der erfindungsgemäßen Vorrichtung dargestellt, wobei die Fig. 2 einen geöffneten Zustand darstellt, während in Fig. 3 ein Verfahrensschritt gezeigt ist, bei welchem die Vorrichtung sich in betriebsbereitem Zustand befindet.

Die erfindungsgemäße Vorrichtung umfaßt eine Heizplatte 2, welche in einem Gehäuse 11 so angeordnet ist, daß sie mittels eines Druckluftzylinders 15 höhenveränderbar in vertikaler Richtung bewegbar ist.

Oberhalb des Gehäuses 11 ist eine Trägerplatte 6 angeordnet, unterhalb der die Unterfolie 17 vorbeigeführt wird.

Angrenzend an das Gehäuse 11 ist erfindungsgemäß eine Tiefziehform 5 vorgesehen, welche ebenfalls unterhalb der Trägerplatte 6 angeordnet ist und in der die erwärmte Unterfolie 17 verformt wird.

Bei dem in den Fig. 2 und 3 gezeigten Ausführungsbeispiel ist jeweils an der Trägerplatte 6 eine Druckluftzufuhr 8 vorgesehen, mittels derer die Folie 1, 17 wie in Fig. 3 gestrichelt angedeutet, ballig verformt werden kann.

Die in den Fig. 2 und 3 gezeigte Vorrichtung arbeitet erfindungsgemäß in folgender Weise. Der Folienbereich 1, welcher unterhalb der Trägerplatte 6 angeordnet ist, wird in einem vorgegebenen Abstand zu der Heizplatte 2 gehalten. Bedingt durch die Wärmestrahlung erfolgt eine Vorwärmung der Folie 1, 17. Anschließend werden die Trägerplatte 6 und das Gehäuse 11 aneinander angenähert, so wie dies in Fig. 3 gezeigt ist. Das Gehäuse 11 weist zur Aufnahme der Heizplatte 2 einen Innenraum 12 auf, welcher eine freie vertikale Bewegbarkeit der Heizplatte 2 ermöglicht.

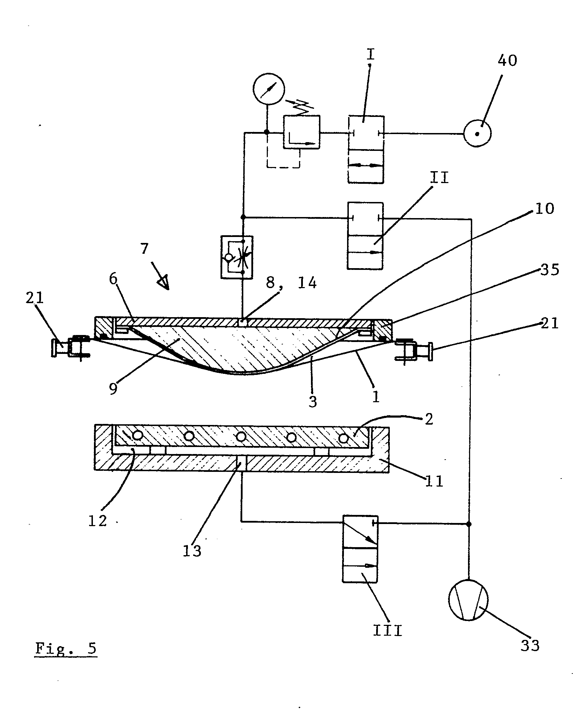

Bei dem in Fig. 3 gezeigten Betriebszustand wird nunmehr durch die Druckluftzufuhr 8 der Raum zwischen dem zu verformenden Folienbereich 1 und der Trägerplatte 6 mit Druckluft beaufschlagt, so daß die Folie 1, 17 zu einem balligen Bereich 3 umgeformt wird, welcher, wie in Fig. 3 gezeigt, einen Abstand zu der Heizplatte 2 aufweist. Nachfolgend wird die Heizplatte 2 in vertikaler Richtung verschoben, bis diese gegen den balligen Bereich 3 anliegt. Durch nachfolgende vertikale Beweis gung der Heizplatte 2 vergrößert sich die Anlagefläche des balligen Bereichs 3 der Folie 1, 17 bis diese, wie in Fig. 4 dargestellt, über einen Großteil ihrer Fläche gegen die Heizplatte 2 anliegt. Hierdurch wird erreicht, daß zwischen Folie und Heizplatte keine Lufteinschlüsse entstehen, auch dann nicht, wenn eine glatte Heizplattenoberfläche verwendet wird. Die Folie wird also überall gleichmäßig erwärmt, was für den nachgeschalteten Verformungsvorgang wichtig ist.

Nach einer gewünschten Erwärmungszeit werden die Folie 1, 17 und die Heizplatte 2 voneinander getrennt, so daß der nunmehr vollständig und gleichmäßig erwärmte Folienbereich 1 weitertransportiert werden kann.

Der Folienbereich 1 wird entlang der Trägerplatte 6 bis über die Tiefziehform 5 geführt und in einem nachfolgenden Arbeitsgang durch Druckbeaufschlagung der der Tiefziehform 5 zugeordneten Druckluft-Zufuhr 8 tiefe zogen, so daß der Folienbereich 1 die Kontur der Tiefziehform 5 einnimmt.

In Fig. 5 ist ein weiteres Ausführungsbeispiel der erfindungsgemäßen Vorrichtung dargestellt, welche sich von dem in den Fig, 2 und 3 gezeigten Ausführungsbeispiel darin unterscheidet, daß die Einrichtung 7 zur balligen Ausbildung des Folienbereichs 1 eine Membran 10 umfaßt, welche an der Trägerplatte 6 gelagert ist. Alternativ zu der Membran 10 oder zusätzlich zu dieser ist es weiterhin möglich, einen balligen Körper 9, welcher beispielsweise aus einem Schaumstoffmaterial gefertigt sein kann, an der Unterseite der Trägerplatte 6 anzuordnen.

Analog zu der in den Fig. 2 bis 4 beschriebenen Vorgehensweise ist es somit möglich, durch Druckbeaufschlagung des Raumes zwischen der Membran 10 und der Trägerplatte 6 mittels der Druckluft-Zufuhr 8 die Membran 10 entsprechend zu verformen, um gleichzeitig die Folie 1, 17 ballig auszubilden. Dies ist auch durch Verwendung des balligen Körpers 9, welcher aus einem elastischen Material besteht, möglich.

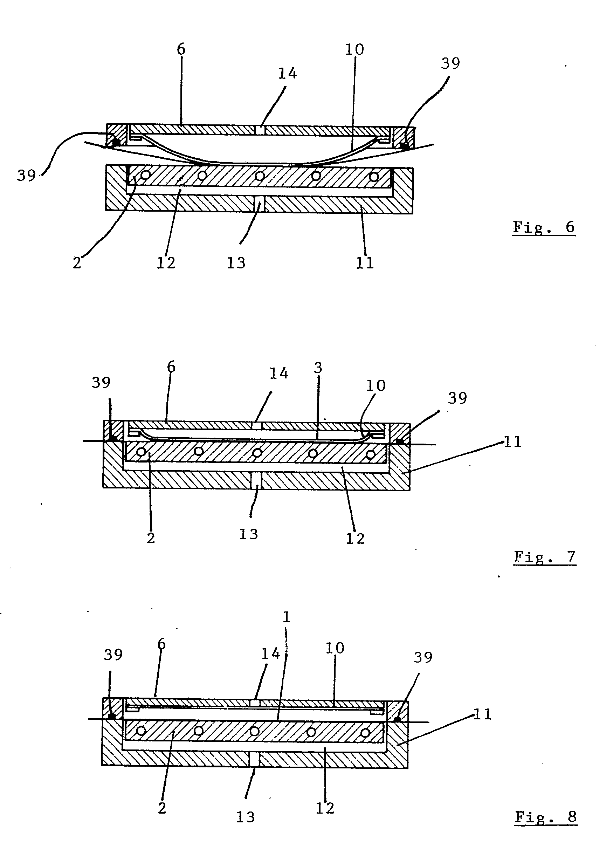

Weiterhin ist in Fig. 5 dargestellt, daß sowohl die Trägerplatte 6 als auch das Gehäuse 11 mit einer Unterdruckversorgung 13, 14 versehen sind, welche mit einer Unterdruckquelle 33 verbindbar sind. Die bereits beschriebene Druckluftzufuhr 8 ist mit einer Druckluftquelle 40 verbunden. In den jeweiligen Leitungen sind Ventile I, II und III angeordnet, welche wie folgt betätigbar sind. In der Anfangsstellung ist das Ventil I geöffnet, während die Ventile II und III geschlossen sind. Dadurch erfolgt eine Aufwölbung des Folienbereichs 1, wobei bevorzugterweise ein Überdruck von 0,5 bis 1 bar gewählt wird. Nachfolgend werden alle drei Ventile I, II und III geschlossen, nachdem der Folienbereich 1 eine optimale Wölbung erreicht hat. Nunmehr erfolgt, wie in den Fig. 6 bis 8 im einzelnen dargestellt ist, eine Annäherung des Folienbereichs 1 bzw. dessen balligen Bereichs 3 gegen die Heizplatte 2. Bei einer entsprechenden Relativbewegung zwischen der Trägerplatte 6 und dem Gehäuse 11 berührt der ballige Bereich 3 die Heizplatte 2 zunächst punktförmig, wobei sich die Berührungsfläche radial vergrößert, so wie dies in Fig. 6 dargestellt ist. Die Fig. 7 zeigt einen Zustand, in welchem die Trägerplatte 6 vollständig gegen das Gehäuse 11 angenähert ist. Dabei liegt der Folienbereich 1 vollständig auf der ebenen Heizplatte 2 an. Die zwischen dem Folienbereich 1 und der Heizplatte 2 befindliche Luft wird dabei über die Unterdruckversorgung 13 aus dem Innenraum 12 des Gehäuses 11 abgesaugt. Dazu ist das Ventil III geöffnet.

Die nachfolgende Trennung der Folie 1, 17 von der Heizplatte 2 erfolgt bei geöffnetem Ventil II und geschlossenen Ventilen I und III. Durch den Unterdruck wird der Folienbereich 1 gegen die Trägerplatte 6 gezogen und zusammen mit dieser von der Heizplatte 2 abgehoben.

Zur Verbesserung der Druckverhältnisse zwischen der Trägerplatte 6 und dem Gehäuse 11 ist bei dem gezeigten Ausführungsbeispiel an der Trägerplatte 6 eine Dichtung 39 vorgesehen.

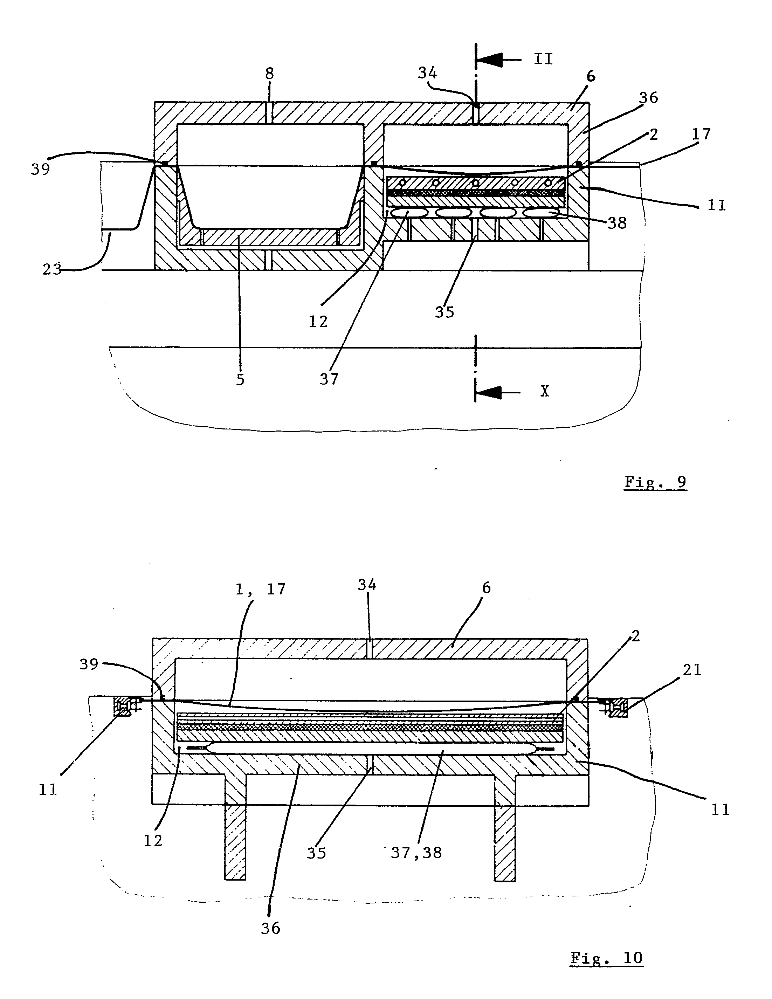

Bei dem Ausführungsbeispiel nach Fig. 9 dient zur Verschiebung der Heizplatte 2, anstelle des Druckluftzylinders 15 gemäß dem Ausführungsbeispiel nach den Fig. 2 und 3, zwei unterhalb der Heizplatte 2 angeordnete und mit Luft gefüllte flexible Schläuche 37, 38. Für die Verformung der Folie 1, 17 sowie der Verschiebung der Heizplatte 2 dienen Unterdruckanschlüsse 34/35 in dem Gehäuse 11. Zunächst wird über den Unterdruckanschluß 35 der Druck unterhalb der Unterfolie langsam abgesenkt, wobei hierdurch zunächst eine ballige Verformung der Unterfolie nach unten erhalten wird. Bei einer weiteren Absenkung des Druckes unterhalb der Unterfolie dehnt sich auch die Luft in den Schläuchen weiter aus, so daß die Heizplatte 2 durch die sich vergrößerten Schläuche nach oben angehoben wird. Zur Unterstützung des Anhebens der Heizplatte wird dann der Druck oberhalb der Oberfolie über den Unterdruckanschluß 34 gleichfalls abgesenkt, so daß die Unterfolie vollens zur Anlage an der Heizplatte 2 gelangt.

Diese Ausführungsform hat den Vorteil, daß die Verformung der Unterfolie wie auch die Verschiebung der Heizplatte allein durch die gezielte Einstellung der Drücke oberhalb und unterhalb der Folie erhalten werden kann, so daß ein zusätzlicher Druckluftzylinder für die Verschiebung der Heizplatte entfällt. Dies hat, abgesehen von der erheblichen Konstruktionsvereinfachung noch den Vorteil, daß die Vorrichtung 22 insgesamt niedriger baut.

Die Erfindung ist nicht auf die gezeigten Ausführungsbeispiele beschränkt, vielmehr ergeben sich für den Fachmann im Rahmen der Erfindung vielfältige Abwandlungsmöglichkeiten und Modifikationen.

**Ansprüche**

1. Verfahren zur Ausbildung eines behälterförmigen Folienkörpers, bei welchem eine thermoplastische Folie erwärmt und anschließend tiefgezogen wird, dadurch gekennzeichnet, daß ein Folienbereich (1) in einem Ab stand zu einer Heizplatte (2) gehaltert und in seinem mittleren Bereich ballig in Richtung auf die Heizplatte (2) verformt wird, daß nachfolgend zunächst die Heizplatte (2) in Anlage gegen den balligen Bereich (3) und dann bis zur vollflächigen Auflage der Folie (1, 17) gebracht wird und daß in einem weiteren Verfahrensschritt die Folie (1, 17) tiefgezogen wird.

2. Verfahren nach Anspruch 1, dadurch gekennzeichnet, daß der ballige Bereich (3) auf die unterhalb der Folie (1, 17) angeordnete Heizplatte (2) aufgelegt wird.

3. Verfahren nach Anspruch 1 oder 2, dadurch gekennzeichnet, daß der Folienbereich (1) mittels eines druckbeaufschlagten Gases ballig verformt wird.

4. Verfahren nach Anspruch 1 oder 2, dadurch gekennzeichnet, daß der Folienbereich (1) mittels eines elastischen Formkörpers (9) ballig verformt wird.

5. Verfahren nach einem der Ansprüche 1 bis 4, dadurch gekennzeichnet, daß der Raum zwischen der Folie (1, 17) und der Heizplatte (2) mit einem Vakuum beaufschlagt wird.

6. Verfahren nach einem der Ansprüche 1 bis 5, dadurch gekennzeichnet, daß die Heizplatte (2) nach Beendigung der Vorwärmung von der Folie (1, 17) wegbewegt wird.

7. Verfahren nach Anspruch 6, dadurch gekennzeichnet, daß die Folie (1, 17) durch Anlegen eines Vakuums von der Heizplatte (2) weggezogen wird.

8. Verfahren nach einem der Ansprüche 1 bis 7, dadurch gekennzeichnet, daß die Folie (1, 17) mittels eines druckbeaufschlagten Gases unter Verwendung einer Tiefziehform (5) tiefgezogen wird.

9. Vorrichtung zur Ausbildung eines behälterförmigen Folienkörpers, insbesondere nach dem Verfahren nach einem der Ansprüche bis 8, mit einer Trägerplatte (6) zur Halterung des Folienbereichs (1) und einer Heizplatte (2), dadurch gekennzeichnet, daß der Rand des Folienbereichs (1) an der Trägerplatte (6) halterbar ist, daß im mittleren Bereich der Trägerplatte (6) eine Einrichtung (7) zur balligen Verformung der Folie (1, 17) angeordnet ist und daß die Heizplatte (2) eben aus gebildet und höhenveränderbar gegenüber der Trägerplatte (6) angeordnet ist.

10. Vorrichtung nach Anspruch 9, dadurch gekennzeichnet, daß die Einrichtung (7) zur balligen Verformung der Folie (1, 17) eine Druckluftzufuhr (8) für ein druckbeaufschlagtes Gas zwischen die Folie (1, 17) und die Trägerplatte (6) umfaßt.

11. Vorrichtung nach Anspruch 9 oder 10, dadurch gekennzeichnet, daß die Einrichtung (7) zur balligen Verformung der Folie (1, 17) einen zwischen der Trägerplatte (6) und der Folie (1, 17) angeordneten, elastischen, ballig ausgebildeten Körper (9) umfaßt.

12. Vorrichtung nach einem der Ansprüche 9 bis 11, dadurch gekennzeichnet, daß die Einrichtung (7) zur balligen Verformung der Folie (1, 17) eine zwischen der Trägerplatte (6) und der Folie (1, 17) angeordnete ballig verformbare oder verformte Membran (10) umfaßt.

13. Vorrichtung nach einem der Ansprüche 9 bis 12, dadurch gekennzeichnet, daß die Heizplatte (2) im Innenraum des nach oben offenen Gehäuses (11) angeordnet ist und daß der Innenraum (12) mit einer Unterdruckversorgung (13) verbunden ist.

14. Vorrichtung nach Anspruch 13, dadurch gekennzeichnet, daß das Gehäuse (11) und die Trägerplatte (6) gegeneinander abdichtbar sind.

15. Vorrichtung nach einem der Ansprüche 9 bis 14, dadurch gekennzeichnet, daß an der Trägerplatte (6) eine Unterdruckversorgung (14) angeschlossen ist.

16. Vorrichtung nach einem der Ansprüche 9 bis 15, dadurch gekennzeichnet, daß die Trägerplatte (6) auf eine Tiefziehform (5) aufsetzbar ist.

17. Vorrichtung nach einem der Ansprüche 1 bis 16, dadurch gekennzeichnet, daß die Trägerplatte (6) mit einem Unterdruckanschluß (34) versehen ist, der zur Änderung des Druckes oberhalb der Unterfolie (1, 17) dient, daß im Gehäuse (11) ein weiterer Unterdruckanschluß (35) angeordnet ist, der zur Änderung des Druckes im Gehäuse (11) und damit unterhalb der Unterfolie dient, und daß zwischen dem Boden (36) des Gehäuses (11) und der Heizplatte (2) ein oder mehrere mit Luft gefüllte verformbare Schläuche (37, 38) angeordnet sind, die bei entsprechender Druckdifferenz zwischen der Ober- und Unterseite der Unterfolie (17) zur Verschiebung der Heizplatte (2) gegen die, infolge der Druckdifferenz bereits zuvor ballig verformten Unterfolie (17) dienen.

Fig. 1

Fig. 2

Fig. 3

Fig. 4

Fig. 5

EP 0 373 395 A2

Fig. 6

Fig. 7

Fig. 8

Fig. 9

Fig. 10